# EUROPEAN PATENT SPECIFICATION

(11) **EP 1 980 749 B1**
(45) Date of publication and mention of the grant of the patent: **26.08.2015**
(21) Application number: 07706760.1
(22) Date of filing: 15.01.2007
(51) Int. Cl.: F04B 39/06, B60H 1/32, F04B 39/00, F04B 49/02, F04C 29/00, F04C 29/04, F04C 23/00, F04C 18/02

(54) **ELECTRIC COMPRESSOR, AND AIR CONDITIONING SYSTEM FOR VEHICLE, USING THE ELECTRIC COMPRESSOR**
ELEKTRISCHER KOMPRESSOR UND KLIMAANLAGENSYSTEM MIT DEM ELEKTRISCHEN KOMPRESSOR FÜR EIN FAHRZEUG
COMPRESSEUR ELECTRIQUE, ET CLIMATISATION POUR VEHICULE UTILISANT LE COMPRESSEUR ELECTRIQUE

(30) Priority: 30.01.2006 JP 2006020483
(43) Date of publication of application: 15.10.2008
(73) Proprietor: Sanden Corporation, Isesaki-shi, Gunma 372-8502 (JP)
(72) Inventor: SHIBUYA, Makoto, Isesaki-shi, Gunma 372-8502 (JP)
(74) Representative: Prüfer & Partner GbR European Patent Attorneys
(86) International application number: PCT/JP2007/050426
(87) International publication number: WO 2007/086270

(56) References cited:
- JP-A- 04 080 554
- JP-A- 2002 161 859
- JP-A- 2002 174 178
- JP-A- 2003 224 386
- JP-A- 2003 262 187
- JP-A- 2004 296 734
- JP-A- 2004 296 734
- JP-A- 2005 036 753
- JP-A- 2005 155 365
- JP-A- 2005 155 365
- US-A1- 2001 012 212
- US-A1- 2003 200 761
- US-A1- 2004 109 772
- US-A1- 2005 201 873

## Description

### Technical Field

This invention relates to an electric compressor and particularly an electric compressor suited for an automotive air conditioning system.

### Background Art

Electric compressors have a compression unit and an electric motor enclosed in a housing. Some electric compressors have also an inverter circuit for driving the electric motor and a control circuit for controlling the inverter circuit, within the housing.

These circuits, particularly the inverter circuit tends to become high in temperature while supplying electric power to the electric motor. Thus, the circuit board of the inverter circuit is arranged in a low-temperature region within the housing. For example, the electric compressor disclosed in Japanese Unexamined Patent Publication No. 2003-139069 has a circuit board of an inverter circuit fixed in close contact with a division wall of the housing, where the division wall is cooled by a working fluid before compressed by the compression unit.

In addition, the electric compressor disclosed in the above publication has a temperature sensor attached to the circuit board. When the temperature detected rises above an upper limit, the rotation speed of the motor is increased to increase the flow rate of the working fluid, thereby cooling the circuit sufficiently. Thus, in this electric compressor, the electric components constituting the circuit are expected to be prevented from overheating, which results in an increase in durability of the circuit, and therefore of the compressor.

Document US 2004/0109772 A1 discloses a compressor according to the preamble of claim 1.

### Disclosure of the Invention

The primary object of this invention is to provide an electric compressor which is further increased in reliability of preventing the overheating of the electric components and therefore has a further increased durability, and an automotive air conditioning system using the electric compressor.

In order to achieve the above object, an electric compressor according to the present invention comprises the features defined in independent claim 1

In the electric compressor according to the present invention, the circuit board is fixed to the leg integrally formed on the division wall. Since heat is efficiently transferred between the circuit board and the division wall via the leg, the circuit board has an increased heat radiation performance. Consequently, the electric components mounted on the circuit board are reliably prevented from overheating and therefore have an increased durability, which leads to an increased durability of the compressor.

Desirably, at least one of the electric components mounted on the circuit board is in contact with said outer side surface. Desirably, the electric compressor further comprises a second circuit board on which electric components for driving the electric motor in cooperation with the electric components on the first circuit board are mounted, where at least one of the electric components on the second circuit board is in contact with said outer side surface. In these desirable configurations of the electric compressor, the electric component in direct contact with the outer side surface of the division wall has an increased heat radiation performance. This prevents the overheating of this electric component and therefore increases the durability of this electric component, which leads to an increased durability of the compressor.

A distal end of the leg is in contact with a metal part of the circuit board. In this configuration of the electric compressor, the contact between the distal end of the leg and the metal part of the control board allows efficient heat transfer between the leg and the circuit board, so that the circuit board has a further increased heat radiation performance. This increases the reliability of preventing the overheating of the electric components mounted on the circuit board.

Desirably, the metal part is a ground terminal of the circuit board. In this desirable configuration of the electric compressor, the contact between the distal end of the leg and the ground terminal allows heat produced in the circuit board to be efficiently transferred to the leg via ground wiring provided to extend across the entire circuit board. Further, since the electric components mounted on the circuit board are connected with the ground wiring, heat produced in the electric components is also efficiently transferred to the leg via the ground wiring. This further increases the reliability of preventing the overheating of the electric components mounted on the circuit board.

Desirably, the electric compressor further comprises a temperature sensor fixed to one or each of the first and second circuit boards and a control means for driving the electric motor basing on a result of detection by the temperature sensor. In this desirable configuration of the electric compressor, the temperature of an electric component is detected by the temperature sensor, and the control means drives the electric motor basing on a result of detection by the temperature sensor. The electric motor drives the compression unit, so that a low-pressure working fluid is drawn to the compression unit across the housing. In this process, the division wall is cooled by the flowing working fluid, so that the electric components are prevented from overheating.

Desirably, it is arranged such that when, in a waiting state of the electric compressor, temperature detected by the temperature sensor rises above an activation temperature, the control means temporarily drives the electric motor. In this desirable configuration of the electric compressor, when in a waiting state of the electric compressor, temperature detected by the temperature sensor rises above an activation temperature, the electric motor is temporarily driven. The electric motor drives the compression unit, so that a low-pressure working fluid is drawn to the compression unit across the housing. Thus, also in the waiting state of the electric motor, the division wall is cooled by the flowing working fluid, so that the electric components are prevented from overheating.

Here, the waiting state means a state in which an electric compressor, incorporated in a system to allow the system to perform a specific function, does not need to operate since the system is not performing that function. For example, for an electric compressor used in an automotive air conditioning system, the waiting state is a state in which cooling or dehumidifying the vehicle interior is not required.

Desirably, it is arranged such that when, in the waiting state of the electric compressor, the temperature detected by the temperature sensor drops to or below a stop temperature, the control means stops the temporarily-driven electric motor. In this desirable configuration of the electric compressor, when in the waiting state of the electric compressor, the temperature detected by the temperature sensor drops to or below a stop temperature, the temporarily-driven electric motor is stopped. This allows the compressor to prevent the overheating of the electric components, keeping energy consumption at a low level.

In order to achieve the above-mentioned object, an automotive air conditioning system has the electric compressor according to the present invention disposed in an engine room.

In the automotive air conditioning system, the electric compressor has an increased durability, which results in an increase in durability of the whole system.

Let us consider the case in which the automotive air conditioning system is arranged such that when, in the waiting state of the electric compressor, the temperature detected by the temperature sensor rises above the activation temperature, the control means of the electric compressor temporarily drives the electric motor. In this particular configuration, for example, even if the automotive air conditioning system is not performing a cooling or a dehumidification function while the engine is operating, when the engine room becomes hot so that the temperature detected by the temperature sensor exceeds the activation temperature, the electric motor is driven. Thus, the automotive air conditioning system arranged this way is increased in reliability of preventing the overheating of the electric components of the electric compressor, which leads to a further increase in durability of the whole system.

### Brief Description of the Drawings

FIG. 1 is a diagram showing a schematic configuration of an embodiment of an automotive air conditioning system;
FIG. 2 is a diagram showing a vertical cross section of an electric compressor applied to the system shown in FIG. 1;
FIG. 3 is a diagram showing a part near the distal end of a leg in the cross section shown in FIG. 2, on an enlarged scale;
FIG. 4 is a diagram schematically showing wire connections between an electric compressor, a battery and an air conditioning control device of the system shown in FIG. 1;
FIG. 5 is a flow chart schematically showing a protective operation program, which is executed by a control circuit shown in FIG. 4;
FIG. 6 is a diagram showing a part near a circuit chamber of a variant of the compressor; and
FIG. 7 is a flow chart schematically showing a variant of the protective operation program, which is executed by the air conditioning control device shown in FIG. 4 as an interruption routine.

### Best Mode of Carrying out the Invention

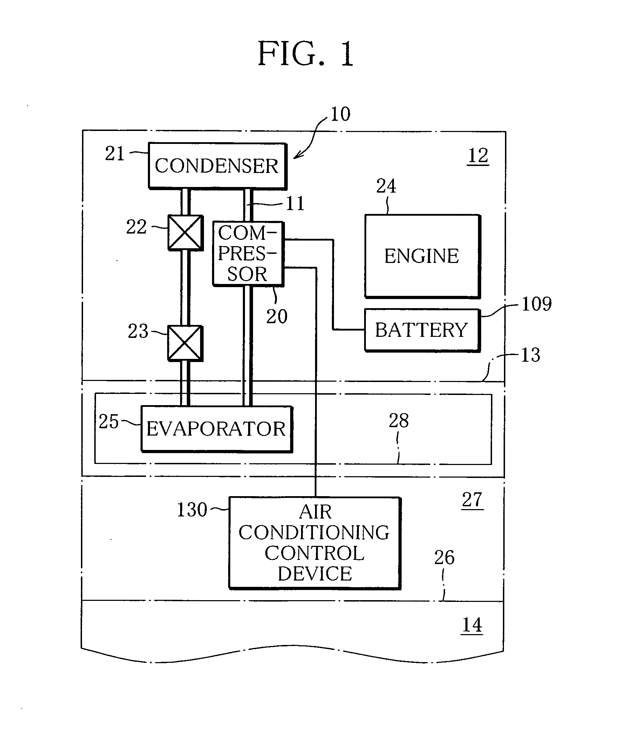

FIG. 1 shows a schematic configuration of an embodiment of an automotive air conditioning system.

The system includes a refrigeration circuit 10, and a refrigerant circulation passage 11 of the refrigeration circuit 10 extends from a vehicle engine room 12 into a vehicle interior 14 through a partition wall 13. Within the engine room 12, an electric compressor 20, a condenser 21, a receiver 22 and an expansion valve 23 are disposed in the refrigerant circulation passage 11 in this order as viewed in the direction of the refrigerant circulation. The electric compressor 20 is arranged near the engine 24, and the condenser 21 is arranged near a vehicle radiator grill, together with a fan (not shown).

Within the vehicle interior 14, an evaporator 25 is disposed in the refrigerant circulation passage 11. The evaporator 25 is located downstream of the expansion valve 23. A front part of the vehicle interior 14 is defined as an instrument room 27 by an instrument panel 26, and the evaporator 25, enclosed in an air-conditioning unit housing 28 together with a blower (not shown), is arranged within the instrument room 27.

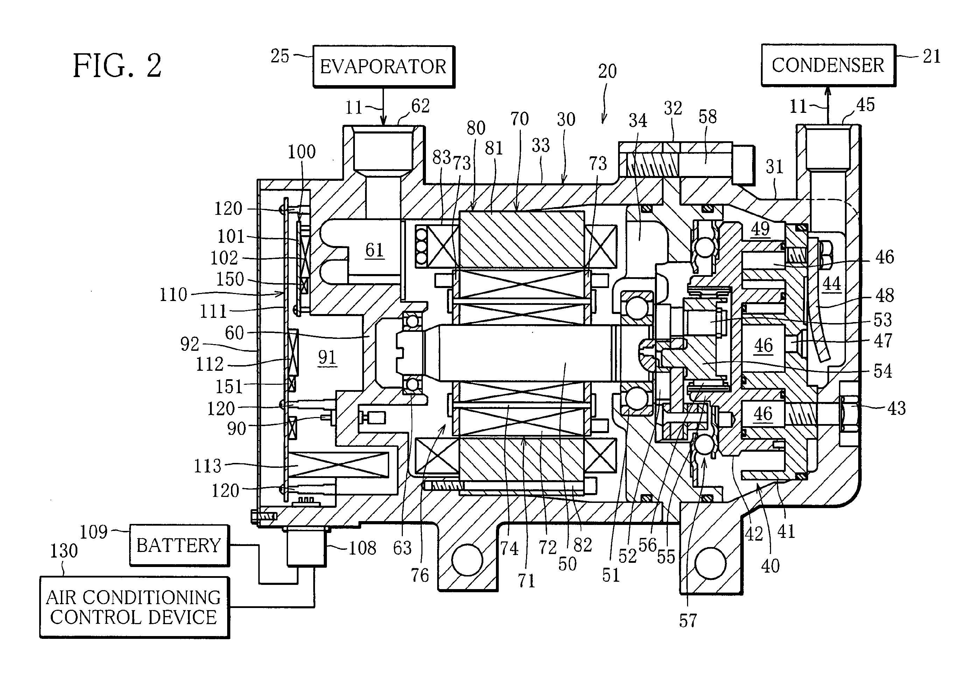

FIG. 2 shows an electric scroll compressor used as the compressor 20. The compressor 20 has an approximately cylindrical housing 30, and the housing 30 has a unit casing 31, a support wall 32 and a motor casing 33 which are made of metal and arranged in this order, from the right to the left in FIG. 2.

The unit casing 31 is in the shape of a cup, and a scroll unit 40 is enclosed in the unit casing 31. The scroll unit 40 has a fixed scroll 41 and a movable scroll 42, and the fixed scroll 41 is fixed to an end wall of the unit casing 31 by a plurality of fixing bolts 43.

The interior of the unit casing 31 is axially divided in two by a base plate of the fixed scroll 41, and a discharge chamber 44 is defined between the base plate of the fixed scroll 41 and the end wall of the unit casing 31. A discharge port 45 communicating with the discharge chamber 44 is formed in the cylindrical wall of the unit casing 31, at a position near the end wall of the unit casing 31. The discharge port 45 is connected to the condenser 21 by a segment of refrigerant circulation passage 11.

The movable scroll 42 is arranged to the motor casing 33 side, and the fixed and movable scrolls 42, 42 are engaged such that a plurality of compression chambers 46 are formed between their spiral walls. As the movable scroll 42 moves circularly relative to the fixed scroll 41, the chambers 46 shift toward the center of the fixed and movable scrolls 41, 42, reducing their volumes. The compression chamber 46 that has arrived at the center communicates with the discharge chamber 44 via a discharge hole 47 formed approximately at the center of the base plate of the fixed scroll 41. The discharge hole 47 is opened and closed by a discharge valve (not shown). The discharge valve is a reed valve attached to the end face of the fixed scroll 41 which faces the discharge chamber 44. Reference sign 48 indicates a valve holddown member which regulates the opening of the reed valve.

Within the unit casing 31, there is defined an intake chamber 49 surrounding the movable scroll 42. The compression chamber 46 that is at the radially outermost position communicates with the intake chamber 49.

A support wall 32 is fitted to the open end of the unit casing 31. The support wall 32 has a shaft hole in the center, and a communication hole 34 outside the shaft hole. A rotary shaft 50 is passed through the shaft hole, and a ball bearing 51 is fitted between the shaft hole and the rotary shaft 50. The rotary shaft 50 has a large-diameter end portion 52 positioned within the unit housing 31. On a crank pin 53 projecting from the large-diameter end portion 52, an eccentric bush 54 is fitted. The eccentric bush 54 is enclosed in a boss 55 formed on the rear side of the movable scroll 42, and a needle bearing 56 is fitted between the eccentric bush 54 and the boss 55. By these crank pin 53, eccentric bush 54 and needle bearing 56, rotation of the rotary shaft 50 is translated into circular motion of the movable scroll 42.

Between the base plate of the movable scroll 42 and the support wall 32, a ball coupling 57 is provided. The ball coupling 57 not only prevents the movable scroll 42 from rotating on its axis while moving circularly relative to the fixed scroll 41, but also functions as a thrust bearing to receive reaction force against compression from the movable scroll 42.

A motor casing 33 is in the shape of a cylinder open at either end. The motor casing 33 and the unit casing 31 are connected by a plurality of connecting bolts 58, with the support wall 32 interposed between their open ends.

The interior of the motor casing 31 is axially divided in two by a division wall 60. A stator chamber 61 is defined between the division wall 60 and the support wall 32. An intake port 62 communicating with the stator chamber 61 is formed in the cylindrical wall of the motor casing 33, at a position near the division wall 60. The intake port 62 is connected to the evaporator 25 by a segment of refrigerant circulation passage 11.

The above-mentioned rotary shaft 50 extends across the stator chamber 61, and the end of the rotary shaft 50 opposite the large-diameter end is located near the division wall 60. A cylindrical bearing support projects from the center of the division wall 60, and a ball bearing 63 is fitted between the inner surface of the bearing support and the rotary shaft 50. Thus, the rotary shaft 50 is rotatably supported by the ball bearings 51, 63 in a pair.

The rotary shaft 50 constitutes a part of a rotor 71 of, for example a brushless three-phase induction motor 70. A laminated member 72 constituted by annular magnetic steel sheets, serving as an approximately cylindrical iron core, is fitted on the rotary shaft 50. The laminated member 72 is held between end plates 73 in a pair at the opposite ends. The end plates 73 are connected by a plurality of rivets 74.

The laminated member 72 of the rotor 71 is surrounded by a stator 80, and the stator 80 includes an approximately cylindrical core 81. The core 81 is fitted into the inner cylindrical surface of the motor casing 33 and fixed to the division wall 60 by fixing bolts 82. A plurality of slots are formed in the inner cylindrical surface of the core 81, circumferentially apart from each other, so that stator teeth are provided between the adjacent slots. Wire is wound around each stator tooth to form coils 83. By supplying a current to the coils 83, each stator tooth is magnetized.

The laminated member 72 of the rotor 71 and the stator 70 are located approximately in the middle in the axial direction of the stator chamber 61, and the division wall 60 side and the support wall 32 side of the stator chamber 61 communicate with each other, for example through a gap (not shown) provided between the laminated member 72 and the stator 80. Thus, the intake port 62 communicates with the intake chamber 49 via the stator chamber 61.

From the coils 83 of the stator 80, three input lines (not shown) extend, and the ends of the three input lines are connected to ends of three pins 90 extending through the division wall 60 in an air-tight and insulated manner, respectively. Only one of the three pins 90 is shown in FIG. 1.

The other ends of the three pins 90 located within a circuit chamber 91 function as an input of the electric motor 70, namely, U-, V- and W-terminals. The circuit chamber 91 is defined between the division wall 60 and an end plate 92 fixed at the end of the motor casing 33 opposite the support wall.

An output of an inverter circuit 100 disposed in the circuit chamber 91 is electrically connected to the above-mentioned ends of the pin 90, namely, the U-, V-, and W-terminals. The inverter circuit 100 is a three-phase bridge circuit, and includes a printed circuit board 101 (hereinafter referred to as an "inverter board") and an IGBT module 102 mounted on the inverter board 101.

The inverter board 101 is arranged near and parallel to the division wall 60 and screwed to the division wall 60. The IGBT module 102 is located between the inverter board 101 and the division wall 60, and the upper surface of the IGBT module 102 is in direct plane contact with the division wall 60. When viewed in the circumferential direction of the motor casing 33, the IGBT module 102 is in contact with the division wall 60 at the position approximately corresponding to the intake port 62.

An input of the inverter circuit 100 is electrically connected to a battery 109 (DC power source) disposed in the engine room 12, via an input/output plug 108 attached to the cylindrical wall of the motor casing 33. The input of the inverter circuit 100 is also electrically connected to an output of a control circuit 110, which is also disposed in the circuit chamber 91.

The control circuit 110 is provided to perform VVVF control (variable-voltage variable-frequency control) on the inverter circuit 100, and includes a printed circuit board 111 (hereinafter referred to as a "control board") and electric components, such as a microcomputer 112 and a capacitor 113, mounted on the control board 111.

The control board 111 is larger than the inverter board 101, and located further from the division wall 60 than the inverter board 101 is. The control board 111 is supported by a plurality of columnar legs 120. Each leg 120 integrally projects from the division wall 60, and when viewed in the axial direction of the motor casing 33, the distal ends of all the legs 120 are on the same imaginary plane. Since the circuit chamber 91 side surface of the division wall 60 is not flat, the legs 120 are different in length.

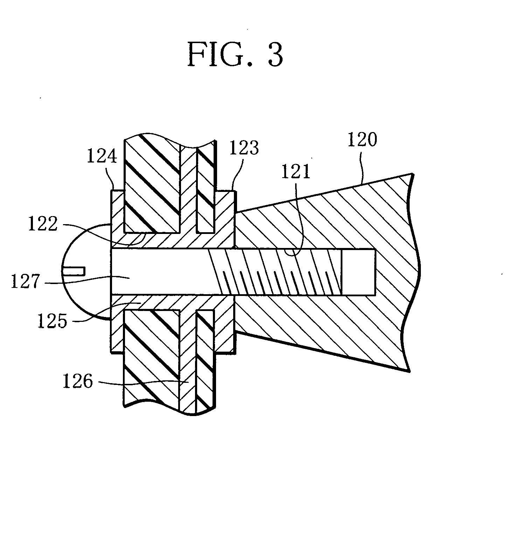

As shown in FIG. 3, bottomed threaded holes 121 open at the centers of the distal ends of the legs 120, respectively. The control board 111 has through holes 122 at the positions corresponding to the threaded holes 121. Each of the through holes 122 has its open ends in metal lands 123, 124 formed on each side of the control board 111. The inner surface of the through hole 122 is covered with a metal coating 125, and the metal coating 125 connects the lands 123, 124.

Each through hole 122 extends through a metal layer 126 provided within the control board 111 for grounding, and the metal coating 125 and the metal layer 126 are joined. When the control board 111 is fixed to the legs 120 by fastening screws 127 into the threaded holes 121 via the through holes 122, the distal ends of the legs 120 and the heads of the screws 127 come in direct plane contact with the corresponding lands 123, 124, respectively.

Referring back to FIG. 2, an input of the control circuit 110 is connected to an air conditioning control device 130 via the above-mentioned input/output plug 108. The air conditioning control device 130 is placed in the above-mentioned instrument room 27.

This electric compressor 20 further includes temperature protection circuits for the inverter circuit 100 and the control circuit 110, respectively, and the temperature protection circuits include a temperature sensor 150 mounted on the inverter board 101 and a temperature sensor 151 mounted on the control board 111, respectively. The temperature sensor 150 on the inverter board 101 is arranged near the IGBT module 102 to detect the temperature of the IGBT module 102, and the temperature sensor 151 on the control board 111 is arranged near the microcomputer 112 to detect the temperature of the microcomputer 112. The temperature sensors 150, 151 are electrically connected to the input of the control circuit 110.

The circuit chamber 91 is filled with a resin material to protect the inverter circuit 100, the control circuit 110 and the temperature protection circuits against vibration, although hatching for indicating the resin material is omitted in FIG. 2.

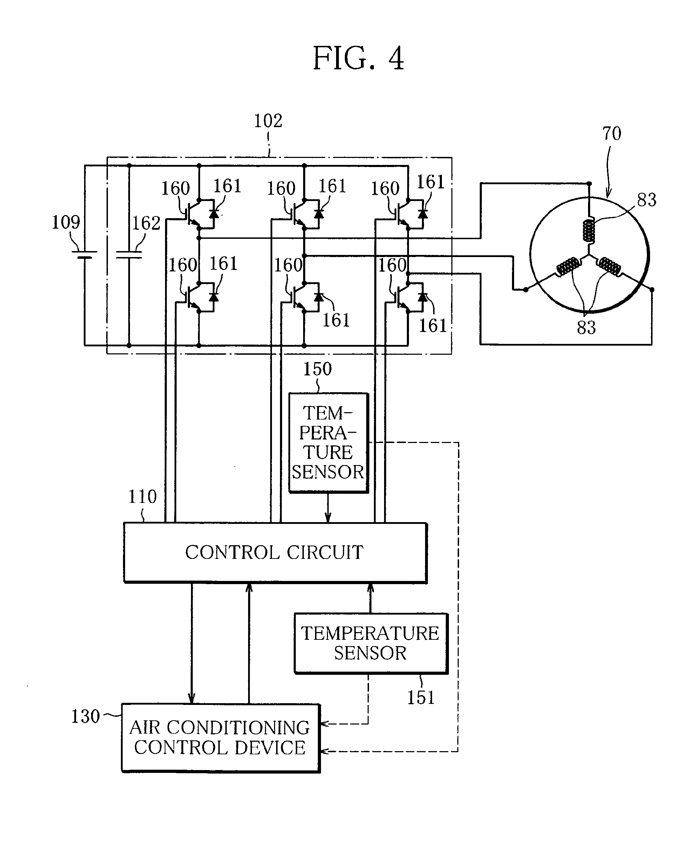

FIG. 4 schematically shows wire connections between the above-described electric motor 70, inverter circuit 100, control circuit 110, air conditioning control device 130, temperature protection circuits and battery 109.

As seen from FIG. 4, the IGBT module 102 includes six IGBTs (insulated-gate bipolar transistors) 160, which are power transistors, six feedback diodes 161 and a smoothing capacitor 162. The control circuit 110 switches a gate voltage to the gate terminal of each IGBT 160 on and off.

Next, the operation of the above-described automotive air conditioning system will be described.

The air conditioning control device 130 performs main control over the automotive air conditioning system. When the vehicle interior 14 needs to be cooled or dehumidified according to an instruction given by a passenger, the air conditioning control device sends a control signal to the control circuit 110 of the electric compressor 20. Receiving the control signal, the control circuit 110 applies a gate voltage to the IGBTs 160 of the inverter circuit 100, thereby driving the electric motor 70. As the electric motor 70 operates, the rotary shaft 50 rotates, which causes the movable scroll 42 to move circularly. The circular movement of the movable scroll 42 results in shift of the compression chambers 46.

As the compression chambers 46 shift, an intake step, namely a step of taking a refrigerant, or a working fluid from the intake chamber 49 into the compression chambers 46, a compression step, namely a step of compressing the taken-in refrigerant in the compression chambers 46, and a discharge step, namely a step of discharging the compressed refrigerant from the compression chambers 46 into the discharge chamber 44 are performed. In other words, the refrigerant in gas form in the evaporator 25 is drawn to the intake port 62 via the refrigerant circulation passage 11, and the refrigerant in high-temperature liquid form is sent from the discharge port 45 to the condenser 21 via the refrigerant circulation passage 11.

Here, the gaseous refrigerant in the evaporator 25 results from almost complete vaporization of the refrigerant exiting the expansion valve 23 in a wet state. An air current created by a blower to flow across the exterior of the evaporator 25 is cooled by the refrigerant taking heat to vaporize. The resulting cold air is heated as necessary, and then caused to flow into the vehicle interior 14, so that the vehicle interior 14 is cooled or dehumidified.

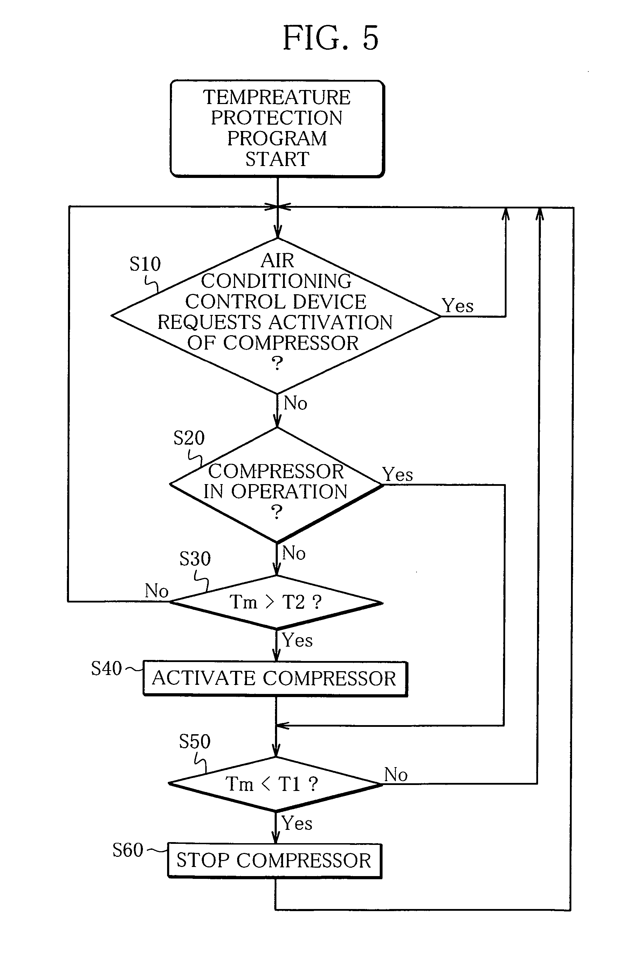

In addition to the above-described main control performed by the air conditioning control device 130, the microcomputer 112 of the control circuit 110 constantly executes a temperature protection program shown in FIG. 5. It is to be noted that the microcomputer 112 executes two temperature protection programs provided for the IGBT module 102 and the microcomputer 112, in parallel. Since these two temperature protection programs are almost the same in structure, the temperature protection program for the microcomputer 112 will be described as an example.

According to the temperature protection program, first whether or not the control circuit 110 is requested by the air conditioning control device 130 to activate the compressor 20, namely whether or not the control circuit 110 has received from the air conditioning control device 130 a control signal indicating that the compressor 20 should be activated (S10). As long as the air conditioning control device 130 requests activation of the compressor 20, step S10 of the program is repeated. If the air conditioning control device 130 does not request activation of the compressor 20, the control circuit 110 determines whether or not the compressor 110 is in operation (S20).

If at step S20, it is determined that the compressor 20 is at rest, whether or not the temperature Tm of the microcomputer 112 detected by the temperature sensor 150 is higher than a predetermined activation temperature T2 is determined (S30). The activation temperature T2 is 85°C, for example. If the temperature Tm is not higher than the activation temperature T2, the flow of control returns to step S10. If the temperature Tm is higher than the activation temperature T2, the control circuit 110 applies a gate voltage to each of the IGBTs 160 at predetermined timings, thereby driving the electric motor 70, thereby activating the compressor 20 (S40).

After the compressor 20 is activated, the control circuit 110 determines whether or not the temperature Tm is lower than a predetermined stop temperature T1 (S50). The stop temperature T1 is lower than the activation temperature T2, and 80°C, for example. If the temperature Tm is lower than the stop temperature T1, the control circuit 110 ceases to apply the gate voltage to each of the IGBTs 160, thereby stopping the electric motor 70, thereby stopping the compressor 20 (S60). If the temperature Tm is not lower than the stop temperature T1, the flow of control returns to step S10. If the air conditioning control device 130 does not request the activation of the compressor 20 when the flow of control has returned to step S10, it means that the compressors 20 has been activated at step S40 in a preceding cycle. Thus, the flow of control jumps to step S50 from step S20.

The schematic structure of the temperature protection program for the microcomputer 112 is as described above. In the temperature protection program for the IGBT module 102, the temperature Tm in the temperature protection program for the microcomputer 112 is replaced with the temperature Ti of the IGBT module 102 measured by the temperature sensor 150.

In the above-described automotive air conditioning system, the electric compressor 20 has an increased durability compared with the compressor in the conventional system, which results in an increased durability of the whole system. The reasons for the increase in durability of the electric compressor 20 are as follows:
In the electric compressor 20, the control board 111, disposed farther from the division wall 60 than the inverter board 101, is fixed to the distal ends of the legs 120 integrally formed on the division wall 60. Since heat is efficiently transferred between the control board 111 and the division wall 60 via the legs 120, the control board 111 has an increased heat radiation performance. Consequently, the electric components mounted on the control board 111 to constitute the control circuit 110, such as the microcomputer 112 and the capacitor 113, are reliably prevented from overheating, which results in an increase in durability of the electric components constituting the control circuit 110, and therefore of the compressor 20.

Further, in the electric compressor 20, the IGBT module 102 mounted on the inverter board 101 is in direct contact with the circuit chamber 91 side surface of the division wall 60, so that the IGBT module 102 has an increased heat radiation performance. Thus, the IGBT module 102, or in other words, the electric components constituting the inverter circuit 100, such as the IGBTs 160, the feedback diodes 161 and the smoothing capacitor 162, are prevented from overheating and therefore have an increased durability, which results in an increase in durability of the compressor 20.

Further, in the electric compressor 20, the distal end of each leg 120 is in contact with the metal land 123 on the control board 111, which allows efficient heat transfer between the legs 120 and the control board 111, so that the control board 111 has a further increased heat radiation performance. This increases the reliability of preventing the overheating of the electric components constituting the control circuit 110.

Further, in the electric compressor 20, each land 123 is joined to the metal layer 126 provided for grounding the control circuit 110 and functions as a ground terminal. The contact between the distal ends of the legs 120 and the lands 123 allows heat produced in the control board 111 to be efficiently transferred to the legs 120 via the metal layer 126 provided to extend across the entire control board 111 in a predetermined pattern. Particularly, since the metal layer 126 is connected to the respective electric components constituting the control circuit 110, heat produced in the electric components is also efficiently transferred to the legs 120 via the metal layer 126. This further increases the reliability of preventing the overheating of the electric components constituting the control circuit 110.

Further, the temperatures Ti, Tm of the IGBT module 102 and the microcomputer 102 are detected by the temperature sensors 150, 151, respectively, and the electric compressor 20 is activated by the microcomputer 112 of the control circuit 110 on the basis of the detection results. Specifically, even in a waiting state in which the electric compressor 20 is not requested to operate by the air conditioning control device 130, if at least one of the temperatures Ti, Tm detected by the temperature sensors 150, 151 rises above the activation temperature T2, the electric compressor 20 is temporarily activated by the microcomputer 112 of the control circuit 110. When the electric compressor 20 is activated, the electric motor 70 drives the scroll unit 40, i.e., the compression unit, so that a low-pressure refrigerant is drawn to the compression unit across the stator chamber 61. Thus, also in the waiting state, the division wall 60 is cooled by the flowing refrigerant, so that the electric components, including the IGBT module 102 and the microcomputer 112, are prevented from overheating.

Further, if, in the waiting state, the temperatures Ti, Tm detected by the temperature sensors 150, 151 drop to or below the stop temperature T1, the electric compressor 20 is stopped by the microcomputer 112 of the control circuit 110. This allows the electric compressor 20 to prevent the overheating of the electric components, keeping power consumption at a low level.

Specifically, in the automotive air conditioning system using this electric compressor 20, for example when the operation of the engine 24 makes the engine room 12 hot so that the temperatures Ti, Tm detected by the temperature sensors 150, 151 exceed the activation temperature T2, the electric compressor 20 in the waiting state is temporarily activated. Thus, in this system, the electric components used in the electric compressor 20 are prevented from overheating with an increased reliability, which results in a further increase in durability of the whole system.

The present invention is not limited to the above-described embodiment but can be modified in various ways. For example, although in the described embodiment, the inverter circuit 100, the control circuit 110 and the temperature protection circuits are disposed in the circuit chamber 91, another circuit can be disposed therein.

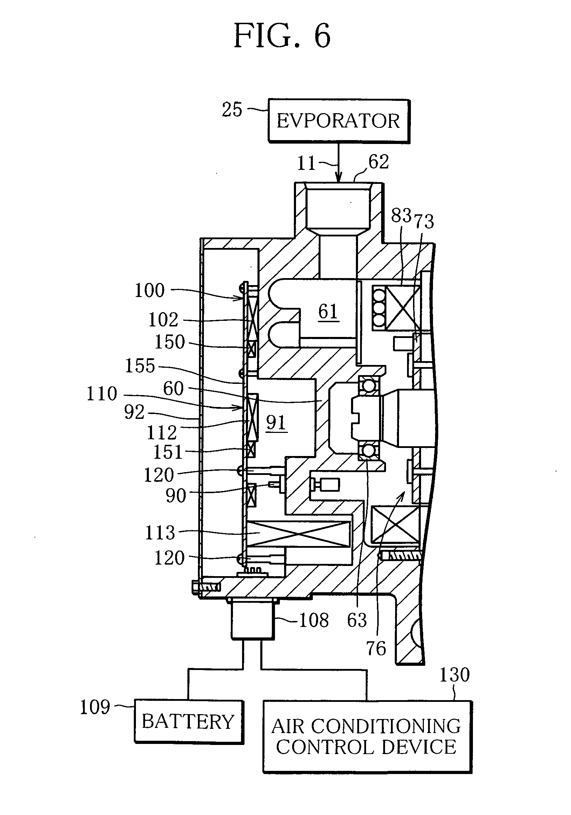

Further, the number of circuit boards disposed therein is not limited to two, namely the inverter board 101 and the control board 111. For example, as shown in FIG. 6, the inverter circuit, the control circuit and the protection circuits can be constructed on a single circuit board 155.

Although in the described embodiment, the control board 111 is fixed to the distal ends of the legs 120, the number of legs 120 can be reduced up to one. The shape as well as the size of the leg is not limited to a particular one. The leg can be in the shape of a circular column, an elliptic column, a rectangular column, a circular truncated cone or the like. In an example where a single circuit board is fixed to four legs in the shape of a circular column, the legs measure no less than 5mm but no greater than 30mm in length and no less than 10mm but no greater than 14mm in diameter, for example.

Although in the described embodiment, the inverter circuit is constructed using an IGBT module, the inverter circuit can use power transistors other than IGBTs as switching devices.

Although in the described embodiment, two temperature sensors 150, 151 are arranged to measure the temperatures Ti, Tm of the IGBT module 102 and the microcomputer 112, the temperature sensors can be arranged to measure the temperatures of other electric components. Further, the number of temperature sensors provided is not limited to two.

Although in the described embodiment, the electric motor 70 of the electric compressor 20 is a brushless induction motor, the structure of the electric motor provided is not limited to a particular one. Further, although in the described embodiment, the electric compressor 20 is an electric scroll compressor having a compression unit constituted by a scroll unit 40, the electric compressor can be an electric reciprocating compressor having a compression unit constituted by a cylinder block and a piston.

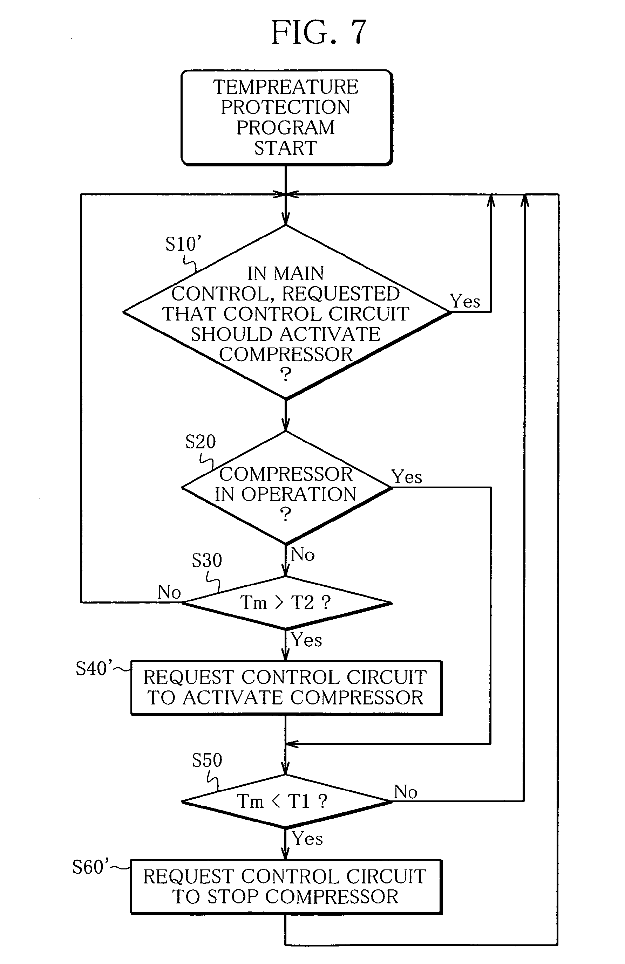

Although in the described embodiment, the microcomputer 112 of the control circuit executes a protective operation program, it can be arranged such that the air conditioning control device 130 provided outside the compressor 20 executes a protective operation program, for example as an interrupt routine, in addition to programs for main control. In this case, the temperature sensors 150, 151 are connected to the air conditioning control device 130 as indicated in broken lines in FIG. 4. As seen from FIG. 7, the protective operation program executed by the air conditioning control device 130 is slightly different from the flow chart shown in FIG. 5. Specifically, it differs in that the air conditioning control device 130 determines whether or not it is requested, in the main control, that the control circuit 110 should activate the compressor 20 (S10'), requests the control circuit 110 to activate the compressor 20 (S40'), and requests the control circuit 110 to stop the compressor 20 (S60').

Last, it goes without saying that the electric compressor according to the present invention is applicable to systems other than the automotive air conditioning system.

## Claims

1. An electric compressor (20), comprising:
an electric motor (70) for driving a compression unit for compressing a working fluid, enclosed in a housing together with the compression unit,
a division wall (60) dividing the interior of the housing and having a side surface in contact with a working fluid before compressed by the compression unit,
a leg (120) integrally formed on a reverse side surface of the division wall (60), and
a first circuit board (111) on which electric components for driving the electric motor (70) are mounted, the first circuit board (111) being fixed to the leg (120), **characterized in that**
the first circuit board (111) includes a metal layer (126) provided inside to be grounded, and metal lands (123, 124) provided on opposite board surfaces, the metal lands (123, 124) each being connected to the metal layer (126), and the leg (120) having an end in contact with one of the lands (123, 124).

2. The electric compressor (20) according to claim 1, wherein
at least one of said electric components mounted on the circuit board is in contact with said reverse side surface.

3. The electric compressor (20) according to claim 1 or 2, further comprising:
a temperature sensor (151) fixed to the circuit board (111), and
a control device (130) for driving the electric motor (70) basing on a result of detection by the temperature sensor (151).

4. The electric compressor according to claim 3, wherein
when, in a waiting state of the electric compressor (20), temperature detected by the temperature sensor (151) rises above an activation temperature, the control device (130) has a function to drive temporarily the electric motor.

5. The electric compressor (20) according to claim 4, wherein
when, in the waiting state of the electric compressor (20), the temperature detected by the temperature sensor (151) drops to or below a stop temperature, the control device (130) has a function to stop the temporarily-driven electric motor (70).

6. The electric compressor (20) according to claim 1, further comprising a second circuit board (101) on which electric components for driving the electric motor (70) in cooperation with said electric components on the first circuit (111) board are mounted, wherein
at least one of the electric components on the second circuit board (101) is in contact with said reverse side surface.

7. An automotive air conditioning system comprising an electric compressor (20) according to one of claims 1 to 6 disposed in an engine room.

## Patentansprüche

1. Elektrischer Kompressor (20) aufweisend:
einen Elektromotor (70) zum Antreiben einer Verdichtereinheit zum Verdichten eines Arbeitsfluids, der zusammen mit der Verdichtereinheit in einem Gehäuse enthalten ist,
eine Trennwand (60), die das Innere des Gehäuses unterteilt und die eine Seitenfläche hat, die mit einem Arbeitsfluid in Kontakt ist, bevor es durch die Verdichtereinheit verdichtet wird,
ein Bein (120), das an einer Rückseitenfläche der Trennwand (60) integral gebildet ist, und
eine erste Leiterplatte (111), auf der elektrische Komponenten zum Ansteuern des Elektromotors (70) montiert sind, wobei die erste Leiterplatte (111) an dem Bein (120) befestigt ist, **dadurch gekennzeichnet, dass**
die erste Leiterplatte (111) eine Metallschicht (126), die innen vorgesehen ist, um geerdet zu werden, und auf gegenüberliegenden Plattenseiten vorgesehene metallische Kontaktstellen (123, 124) enthält, wobei jede der Kontaktstellen (123, 124) mit der Metallschicht (126) verbunden ist, und das Bein (120) ein Ende hat, das mit einer der Kontaktstellen (123, 124) in Kontakt ist.

2. Elektrischer Kompressor (20) gemäß Anspruch 1, wobei
zumindest eine von den auf der Leiterplatte montierten elektrischen Komponenten mit der Rückseitenfläche in Kontakt ist.

3. Elektrischer Kompressor (20) gemäß Anspruch 1 oder 2, ferner aufweisend:
einen an der Leiterplatte (111) befestigten Temperatursensor (151), und
eine Steuerungseinrichtung (130), um den Elektromotor (70) basierend auf einem Erfassungsergebnis durch den Temperatursensor (151) anzusteuern.

4. Elektrischer Kompressor gemäß Anspruch 3, wobei,
wenn, in einem Wartezustand des elektrischen Kompressors (20), eine durch den Temperatursensor (151) erfasste Temperatur über eine Aktivierungstemperatur ansteigt, die Steuerungseinrichtung (130) eine Funktion hat, den Elektromotor vorübergehend anzusteuern.

5. Elektrischer Kompressor (20) gemäß Anspruch 4, wobei,
wenn, in dem Wartezustand des elektrischen Kompressors (20), die durch den Temperatursensor (151) erfasste Temperatur auf oder unter eine Abbruchtemperatur fällt, die Steuerungseinrichtung (130) eine Funktion hat, den vorübergehend angesteuerten Elektromotor (70) anzuhalten.

6. Elektrischer Kompressor (20) gemäß Anspruch 1, ferner eine zweite Leiterplatte (101) aufweisend, auf der elektrische Komponenten montiert sind, um den Elektromotor (70) im Zusammenwirken mit den elektrischen Komponenten auf der ersten Leiterplatte (111) anzusteuern, wobei
zumindest eine der elektrischen Komponenten auf der zweiten Leiterplatte (101) mit der Rückseitenfläche in Kontakt ist.

7. Fahrzeugklimaanlage aufweisend, einen in einem Motorraum angeordneten elektrischen Kompressor (20) gemäß einem der Ansprüche 1 bis 6.

## Revendications

1. Compresseur électrique (20) comprenant :
un moteur électrique (70) permettant d'entraîner une unité de compression pour comprimer un fluide de travail, renfermé dans un boîtier avec l'unité de compression,
une paroi de partition (60) subdivisant la partie interne du boîtier et ayant une surface latérale en contact avec le fluide de travail avant qu'il soit comprimé par l'unité de compression,
une patte (120) intégralement formée sur la surface latérale arrière de la paroi de partition (60), et
une première plaquette de circuit imprimé (111) sur laquelle sont montés des composants électriques permettant d'entraîner le moteur électrique (70), cette première plaquette de circuit imprimé (111) étant fixée à la patte (120), **caractérisée en ce que** la première plaquette de circuit imprimé (111) comprend une couche métallique (126) située à sa partie interne pour être mise à la terre, ainsi que des pastilles métalliques (123, 124) situées sur les surfaces opposées de la plaquette, les pastilles métalliques (123, 124) étant connectées chacune à la couche métallique (126) et la patte (120) ayant une extrémité en contact avec l'une des pastilles (123, 124).

2. Compresseur électrique (20) conforme à la revendication 1, dans lequel au moins l'un des composants électriques monté sur la plaquette de circuit imprimé est en contact avec la surface latérale arrière.

3. Compresseur électrique (20) conforme à la revendication 1 ou 2, comprenant en outre :
un capteur de température (151) fixé à la plaquette de circuit imprimé (111), et
un dispositif de commande (130) destiné à entraîner le moteur électrique (70) en fonction de la température détectée par le capteur de température (151).

4. Compresseur électrique (20) conforme à la revendication 3, dans lequel, lorsque, dans un état d'attente du compresseur électrique (20), la température détectée par le capteur de température (151) devient supérieure à une température d'activation, le dispositif de commande (130) remplit la fonction d'entraîner le moteur électrique de manière tempo-raire.

5. Compresseur électrique (20) conforme à la revendication 4, dans lequel, lorsque, dans un état d'attente du compresseur électrique (20), la température détectée par le capteur de température (151) chute à ou au-dessous d'une température d'arrêt, le dispositif de commande (130) remplit la fonction d'arrêter le moteur électrique (70) entraîné temporairement.

6. Compresseur électrique (20) conforme à la revendication 1, comprenant en outre une seconde plaquette de circuit imprimé (101) sur laquelle sont montés des composants électriques permettant d'entraîner le moteur électrique (70) en coopération avec les composants électriques situés sur la première plaquette de circuit imprimé (111),
au moins l'un des composants électriques situés sur la seconde plaquette de circuit imprimé (101) étant en contact avec la surface latérale arrière.

7. Système de climatisation pour véhicule automobile comprenant un compresseur électrique (20) conforme à l'une quelconque des revendications 1 à 6 monté dans le compartiment moteur.
